# EUROPEAN PATENT SPECIFICATION

(11) **EP 2 514 726 B1**
(45) Date of publication and mention of the grant of the patent: **20.02.2019**
(21) Application number: 12164219.3
(22) Date of filing: 16.04.2012
(51) Int. Cl.: C03C 17/36, G02F 1/01

(54) **A method of manufacturing a heat-treatable substrate with a thermochromic film**
Ein Verfahren zur Herstellung eines wärmebehandelbaren Substrats mit thermochromer Beschichtung
Procédé de fabrication d'un substrat revêtu d'un film thermochromique et susceptible de subir un traitement thermique

(30) Priority: 18.04.2011 KR 20110035790
(43) Date of publication of application: 24.10.2012
(73) Proprietor: Corning Precision Materials Co., Ltd., Asan-si, Chungcheongnam-do 336-841 (KR)
(72) Inventor: Jung, Youngsoo, Asan-si ChungCheongNam-Do 336-841 (KR); Moon, Donggun, Asan-si ChungCheongNam-Do 336-841 (KR); Shim, Myungi, Asan-si ChungCheongNam-Do 336-841 (KR); Ryu, Sangryoun, Asan-si ChungCheongNam-Do 336-841 (KR)
(74) Representative: Gulde & Partner

(56) References cited:
- EP-A1- 2 305 615
- US-A1- 2005 147 825
- US-A1- 2006 099 427
- DATABASE WPI Week 200882 Thomson Scientific, London, GB; AN 2008-O12767 XP002714543, -& JP 2008 297177 A (NIPPON SHEET GLASS CO LTD) 11 December 2008 (2008-12-11)
- GRANQVIST C G ET AL: "Advances in chromogenic materials and devices", THIN SOLID FILMS, vol. 518, no. 11, 31 March 2010 (2010-03-31), pages 3046-3053, XP026939341, ELSEVIER-SEQUOIA S.A. LAUSANNE, CH ISSN: 0040-6090, DOI: 10.1016/J.TSF.2009.08.058 [retrieved on 2009-10-30]

## Description

### Field of the Invention

The present invention relates to a heat-treatable substrate with a thermochromic film, and more particularly, to a heat-treatable substrate with a thermochromic film, and has a sacrificial film on at least one of an upper layer and a lower layer of the thermochromic film.

### Description of Related Art

In response to soaring prices of chemical energy sources such as petroleum, the necessity for the development of new energy sources is increasing. In addition, the importance of energy saving technologies is increasing just as much as the necessity for new energy sources. In fact, at least 60% of energy consumption in common houses is attributed to heating and/or cooling. In particular, common houses and buildings lose up to 24% of their energy through windows.

Accordingly, a variety of attempts has been made in order to reduce the amount of energy that is lost through windows while maintaining the aesthetics and view characteristics, which are the basic functions of windows. Representative methods, by way of example, include varying the size of windows and furnishing high-insulation windows.

Types of high insulation window glass include a gas injected pair-glass, in which argon (Ar) gas, krypton (Kr) gas, or the like is disposed between a pair of glass sheets in order to prevent heat exchange, low-e glass, which is coated with a conductive material in order to prevent heat from radiating outward from the room, and the like. Also being studied is a type of glass that is coated with a layer that has specific thermal characteristics in order to adjust the introduction of solar energy.

In particular, the low-e glass is coated, on the surface thereof, with a thin layer of metal or metal oxide, which allows most visible light that is incident on the window to enter, so that the interior of a room can be maintained bright, while blocking radiation in the infrared (IR) range. The effects of this glass are that it prevents the heat of heating from leaking to the outside, and also prevents the energy of heat from outside a building, thereby reducing cooling and heating bills. However, this window has the following drawbacks due to its characteristic of reflecting wavelengths other than visible light. Specifically, it does not admit the IR range of sunlight into the interior of a room, which is a drawback especially in winter, and the transmittance of sunlight is not adjusted according to the season (temperature). Accordingly, the development of a technology that is devised to save cooling and/or heating energy by coating a glass with a thermochromic material is underway. This thermochromic material can selectively transmit or block IR rays, which have strong thermal action.

When a thermochromic coating is applied to the exterior glass of a building, a sunroof, the side and rear windows of a vehicle, or the like, it can save cooling energy in summer by blocking solar heat from outside and save heating energy in winter by allowing solar energy from outside to enter.

However, the above-mentioned coated glass is required to undergo heat treatment. Specifically, the glass is implemented as tempered or heat-strengthened glass when it is used in the construction industry. When this glass is used in vehicles, the glass must be subjected to a process for forming it to become curved, such that it conforms to the streamlined shape of a vehicle. Considering the characteristics of the coated glass, its characteristics frequently deteriorate when it is subjected to heat treatment at a temperature of about 700°C. The thermochromic coating also has problems in that it has quality defects, such as discoloration, pinholes, hazing, splitting, and image distortion, as the result of heat treatment.

JP 2008 297177 A refers to a thermochromic glass in which VO₂ is prevented from being oxidized by high toxic V₂O₅. Therefore, a laminate of sacrificial metal/oxide is provided as a surface protective layer on the VO₂ film.

### BRIEF SUMMARY OF THE INVENTION

The present invention provides a method of manufacturing a thermochromic film coated substrate as defined in claim 1.

The thermochromic film is made of vanadium dioxide (VO₂).

The heat-treatable substrate further includes an auxiliary film formed on an upper surface and a lower surface of the thermochromic film. The sacrificial film is provided between the thermochromic film and the auxiliary film. The auxiliary film is an oxide film.

The auxiliary film is made of titanium dioxide (TiO₂), and the sacrificial film is made of titanium (Ti).

The sacrificial film may have a thickness ranging from 1nm to 5nm.

The sacrificial film made of metal, which is disposed on the upper and lower surfaces of the thermochromic film, can prevent the thermochromic material from agglomerating during the heat-treatment of the substrate, and prevent oxygen and nitrogen in an adjacent layer or the air from diffusing into the thermochromic film, so that high-temperature heat treatment, such as a process for tempering the substrate, a process for heat-strengthening the substrate and a process for forming the substrate to become curved, can be conducted on the substrate.

### BRIEF DESCRIPTION OF THE DRAWINGS

FIG. 1 is a schematic cross-sectional view showing a heat-treatable substrate according to an embodiment of the invention;
FIG. 2 is a conceptual view schematically showing the state of a substrate of the related art after the substrate is heat-treated; and
FIG. 3 is a conceptual view schematically showing the state of a substrate according to an embodiment of the invention after the substrate is heat-treated.

### DETAILED DESCRIPTION OF THE INVENTION

Reference will now be made in detail to various embodiments of the present invention, examples of which are illustrated in the accompanying drawings and described below, so that a person having ordinary skill in the art to which the present invention relates can easily put the present invention into practice.

In the following description of the present invention, detailed descriptions of known functions and components incorporated herein will be omitted when they may make the subject matter of the present invention unclear.

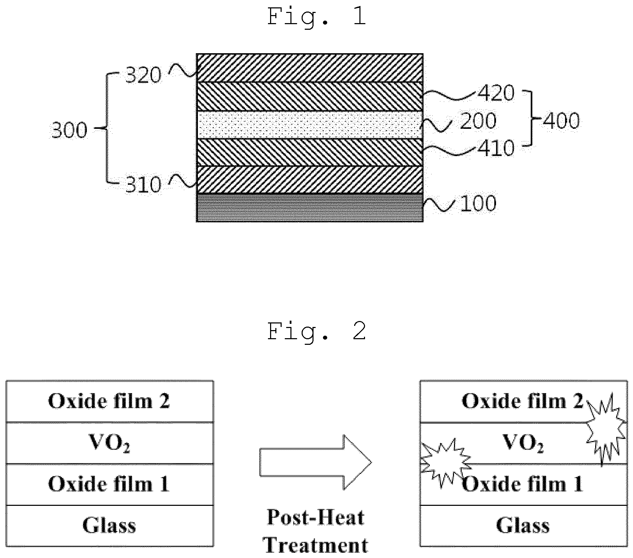

FIG. 1 is a schematic cross-sectional view showing a heat-treatable substrate according to an embodiment of the invention.

Referring to FIG. 1, the heat-treatable substrate includes a base substrate 100, a thermochromic film 200 formed on the base substrate 100, an auxiliary film 300 formed on the upper and lower surfaces of the thermochromic film 200, and a sacrificial film 400 formed between the thermochromic film 200 and the auxiliary film 300, the sacrificial film 400 being made of metal.

The base substrate 100 is a transparent or color substrate that has a predetermined area and a predetermined thickness. It is preferred that the base substrate 100 be made of a sodalime glass substrate.

The thermochromic film 200 is formed by coating the base substrate 100 with a material that causes a thermochromic phenomenon, and serves to control the amount of sunlight that is incident on the base substrate 100.

The thermochromic material changes its color at a given temperature. Specifically, the crystalline structure of the thermochromic material changes due to the thermochromic phenomenon to the extent that its physical properties (such as electrical conductivity and infrared (IR) transmittance) rapidly change. Therefore, the coating of the base substrate with the thermochromic material can achieve the effect of blocking IR rays while allowing visible light to enter at the given temperature or higher.

Here, the thermochromic film 200 is made of vanadium dioxide (VO₂)

The auxiliary film 300 is formed on at least one of the upper and lower surfaces of the thermochromic film 200, and may have the function of improving the optical characteristics or the like of the thermochromic film. By way of example, the auxiliary film may serve as a layer that imparts a low-reflectivity characteristic. In addition, it can also to act to initially block diffusion by preventing the thermochromic film from being directly exposed to the air or the substrate. The auxiliary film 300 is implemented as an oxide film. The auxiliary film 300 is made of titanium dioxide (TiO₂).

The auxiliary film 300 includes an auxiliary film 310, which is formed on the lower surface of the thermochromic film, and an auxiliary film 320, which is formed on the upper surface of the thermochromic film. The auxiliary films 310 and 320 may be made of the same material or different materials depending on their respective functions. For example, the auxiliary film 310 formed on the lower surface of the thermochromic film may be made of a material that serves to adjust the transmittance and color of the thermochromic film, and the auxiliary film 320 formed on the upper surface of the thermochromic film may be made of a material that serves to protect the thermochromic film. The auxiliary film formed on the base substrate may act as a sodium diffusion barrier, which prevents sodium (Na) ions in the base substrate from diffusing into the thermochromic film at a temperature of 350°C or higher, which would otherwise deprive the thermochromic film of its characteristics.

The sacrificial film 400 (410, 420) is formed between the thermochromic film 200 and the auxiliary film 300 (310, 320). The sacrificial film 400 is made of titanium (Ti).

The sacrificial layer 400 serves to prevent the atoms in the thermochromic material from diffusing into the upper and lower auxiliary films 310 and 320, and to prevent the elements such as oxygen and nitrogen, which constitute the auxiliary film 300, from diffusing into the thermochromic film 200. The sacrificial layer 400 can also prevent the thermochromic characteristics from being lost and the thermochromic material from agglomerating.

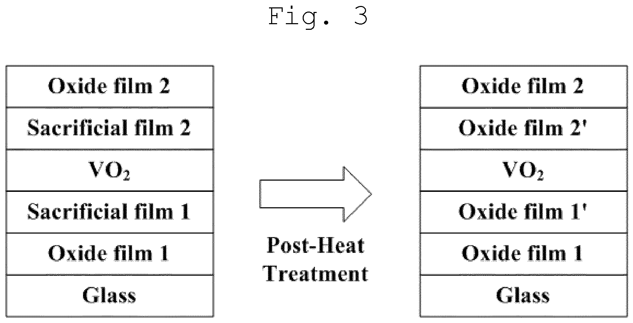

FIG. 2 is a conceptual view schematically showing the state of a substrate of the related art after the substrate is heat-treated, and FIG. 3 is a conceptual view schematically showing the state of a substrate according to an embodiment of the invention after the substrate is heat-treated.

Referring to FIG. 2 and FIG. 3, when the thermochromic film 200 is a VO₂ thin film and the auxiliary film 300 is an oxide film, the sacrificial film 40 serves to prevent VO₂ atoms from diffusing into the oxide film while being oxidized and thus converted into an oxide film by absorbing oxygen that diffuses from the oxide film. However, the VO₂ film still acts as an oxygen barrier that enables the oxidation rate to be maintained.

Accordingly, it is possible to solve the problems with the related art, in which a substrate that includes a VO₂ thin film and an oxide film fails to maintain its level of quality as a product because its phase transition characteristic is lost due to the conversion of VO₂ into V₂O₅ by the additional oxidation of VO₂, or because it suffers from the agglomeration of VO₂ due to heat, delamination from an adjacent layer, or discoloration due to the diffusion of substances during the heat treatment, such as a process for tempering the substrate, a process for heat-strengthening the substrate and a process for forming the substrate to become curved.

Table 1 presents changes in the quality of coating films, such as Ra (roughness), hazing and defects, after being heat-treated. Embodiments 1 - 4, 6, and 7 do not fall under the present invention.

Heat treatment conditions: common vertical furnace (equipment), 700°C - 10 minutes (conditions), atmosphere

**Table 1**

| | Film structure | Ra(nm) | Haze (%) | Defects |
|---|---|---|---|---|
| 1 | Glass/VO₂ | 122 | 7 | Pinhole, splitting, haze |
| 2 | Glass/TiO₂/VO₂/TiO₂ | 103 | 5 | Splitting, haze |
| 3 | Glass/TiO₂/Ti/VO₂/TiO₂ | 41 | 2.1 | Pinhole |
| 4 | Glass/TiO₂/VO₂/Ti/TiO₂ | 29 | 2.3 | Pinhole |
| 5 | Glass/TiO₂/Ti/VO₂/Ti/TiO₂ | 15 | 0.9 | - |
| 6 | Glass/TiO₂/NiCr/VO₂/NiCr/TiO₂ | 21 | 1.2 | - |
| 7 | Glass/TiO₂/Al/VO₂/Al/TiO₂ | 24 | 1.5 | Weak hazing |

Referring to Table 1, the substrate that has only the VO₂ thin film on the glass base substrate exhibits a roughness of 122nm and has defects, such as pinholes, splitting and hazing, after being heat-treated.

In addition, the substrate that has the TiO₂ auxiliary film, VO₂ thin film and TiO₂ auxiliary film on the glass base substrate exhibits a roughness of 103nm and has defects, such as splitting and hazing, after being heat-treated.

In contrast, the substrate that has the TiO₂ auxiliary film, the Ti sacrificial film, the VO₂ thin film, the Ti sacrificial film, and the TiO₂ auxiliary film exhibits a roughness of 15nm and does not have defects, after being heat-treated. Accordingly, it is to be appreciated that the sacrificial film decreases the roughness (agglomeration) of the VO₂ thin film and prevents defects from occurring during the heat-treatment of the coated substrate.

It is preferred that the sacrificial film have a thickness ranging from 1nm to 5nm.

Since the thin sacrificial film is with a thickness ranging from 1nm to 5nm, it is completely oxidized or nitrated during the heat treatment. Consequently, the sacrificial film can be incorporated into the oxide film, which is above or below, thereby minimizing the optical interference due to the provision of the sacrificial film.

## Claims

1. A method of manufacturing a thermochromic film coated substrate, the method comprising the steps of:
a) providing a heat-treatable substrate comprising:
a base substrate (100);
a thermochromic film (200) formed on the base substrate (100) and being made of VO₂;
a sacrificial film (400) formed on an upper surface and a lower surface of the thermochromic film (200), the sacrificial film (400) being made of Ti; and
an auxiliary film (300) formed on the upper surface and the lower surface of the thermochromic film (200) and being made of TiO₂, wherein the sacrificial film (400) is provided between the thermochromic film (200) and the auxiliary film (300); and
b) performing heat treatment of the heat-treatable substrate at 700°C for 10 minutes under atmospheric conditions in air.

2. The method of claim 1, wherein the heat treatment comprises tempering the heat-treatable substrate, heat-strengthening the heat-treatable substrate, or forming the heat-treatable substrate to become curved.

## Patentansprüche

1. Verfahren zur Herstellung eines mit einer thermochromen Schicht beschichteten Substrats, wobei das Verfahren die folgenden Schritte umfasst:
a) Bereitstellen eines wärmebehandelbaren Substrats, umfassend:
ein Basissubstrat (100) ;
eine thermochrome Schicht (200), die auf dem Basissubstrat (100) ausgebildet und aus VO₂ hergestellt ist;
eine Opferschicht (400), die auf einer oberen Oberfläche und einer unteren Oberfläche der thermochromen Schicht (200) ausgebildet ist, wobei die Opferschicht (400) aus Ti hergestellt ist; und
eine Hilfsschicht (300), die auf der oberen Oberfläche und der unteren Oberfläche der thermochromen Schicht (200) ausgebildet und aus TiO₂ hergestellt ist, wobei die Opferschicht (400) zwischen der thermochromen Schicht (200) und der Hilfsschicht (300) vorgesehen ist; und
b) Durchführen einer Wärmebehandlung des wärmebehandelbaren Substrats bei 700 °C für 10 Minuten unter atmosphärischen Bedingungen in Luft.

2. Verfahren nach Anspruch 1, wobei die Wärmebehandlung das Tempern des wärmebehandelbaren Substrats, das Wärmeverfestigen des wärmebehandelbaren Substrats oder das Formen des wärmebehandelbaren Substrats, um gekrümmt zu werden, umfasst.

## Revendications

1. Procédé de fabrication d'un substrat revêtu d'un film thermochromique, le procédé comprenant les étapes consistant à :
a) obtenir un substrat apte au traitement thermique comprenant :
un substrat de base (100) ;
un film thermochromique (200) formé sur le substrat de base (100) et étant constitué de VO₂ ;
un film sacrificiel (400) formé sur une surface supérieure et une surface intérieure du film thermochromique (200), le film sacrificiel (400) étant constitué de Ti ; et
un film auxiliaire (300) formé sur la surface supérieure et la surface inférieure du thermochromique (200) et étant constitué de TiO₂, dans lequel le film sacrificiel (400) est utilisé entre le thermochromique (200) et le film auxiliaire (300) ; et
b) effectuer un traitement thermique du substrat apte au traitement thermique à 700 °C pendant 10 minutes dans des conditions atmosphériques dans l'air.

2. Procédé selon la revendication 1, dans lequel le traitement thermique comprend la trempe du substrat apte au traitement thermique, le renforcement par la chaleur du substrat apte au traitement thermique, ou la formation du substrat apte au traitement thermique pour qu'il devienne incurvé.
